# EUROPEAN PATENT SPECIFICATION

(11) **EP 2 464 511 B1**
(45) Date of publication and mention of the grant of the patent: **16.12.2020**
(21) Application number: 10742990.4
(22) Date of filing: 10.08.2010
(51) Int. Cl.: B32B 5/00

(54) **DURABLE HIGH PERFORMANCE ADHESIVE-BONDED ALLERGEN BARRIER LAMINATES AND PROCESS FOR MAKING SAME**
BESTÄNDIGE LEISTUNGSSTARKE HAFTGEBUNDENE ALLERGENBARRIERELAMINATE UND VERFAHREN ZU IHRER HERSTELLUNG
STRATIFIÉS DE BARRIÈRE ALLERGÈNE LIÉS PAR UN ADHÉSIF À PERFORMANCE ÉLEVÉE DURABLE ET LEURS PROCÉDÉS DE PRODUCTION

(30) Priority: 10.08.2009 US 538440
(43) Date of publication of application: 20.06.2012
(73) Proprietor: DuPont Safety & Construction, Inc., Wilmington, Delaware 19805 (US)
(72) Inventor: KAWKA, Dariusz, Wlodzimierz, Midlothian Virginia 23112 (US)
(74) Representative: Dannenberger, Oliver Andre
(86) International application number: PCT/US2010/044941
(87) International publication number: WO 2011/019674

(56) References cited:
- US-A- 3 616 150

## Description

### BACKGROUND OF THE INVENTION

### 1. Field of the Invention.

This invention relates to allergen barrier laminates useful as washable coverings for bedding articles that include such items as pillow and mattress covers.

### 2. Description of the Related Art.

United States Patent Application Publication US2008/0120783 of Knoff et al discloses an allergen-barrier fabric and a mattress, a pillow, a bed covering, and a liner each comprising an allergen-barrier fabric. This patent publication discloses these allergen-barrier fabrics can withstand at least 10 washings, and even up to 50 washings without mechanical separation or delamination of the various fabric layers, however there is no suggestion as to how such fabrics can routinely withstand numerous washings yet maintain their primary function as a barrier material as measured by their filtration efficiency. Since many bedding articles require routine washing, the combination of mechanical durability and filtration performance durability in an allergen-barrier is a real need. US 3,616,150 A discloses a laminated fabric comprising an outer layer of a textile fabric and an inner layer of a knitted fabric prepared from a spun yarn, the layers being bonded together with an adhesive.

### SUMMARY OF THE INVENTION

In one embodiment, this invention relates to a laminate useful as an allergen barrier structure, comprising in order,
a) a woven fabric layer having a thread count of 180 to 400:
b) a nonwoven allergen barrier layer having a basis weight of from 6 to 10 grams per square meter and consisting of fibers having average diameter of from 100 to 450 nanometers; and
c) a tricot knit fabric layer;
wherein the woven fabric layer is attached to the allergen barrier layer by a first adhesive being distributed in discrete areas on a first side of the allergen barrier layer, the discrete areas of adhesive penetrating into at least 70 % of the thickness of the allergen barrier layer, the first adhesive also penetrating into one surface of the woven fabric layer but not extending through said woven fabric layer from one surface to the other; and wherein the tricot knit fabric layer is attached to the allergen barrier layer by a second adhesive being distributed in discrete areas on a second side of the allergen barrier layer, the discrete areas of adhesive penetrating into at least 70 % of the thickness of the allergen barrier layer, the second adhesive also penetrating into one surface of the tricot knit fabric layer but not extending through said knit fabric layer from one surface to the other. The laminate has a total basis weight of from 50 to 300 grams per square meter and a filtration efficiency as measured by ASTM F2638-07 after 35 washings of 95 percent or greater for a 1 micrometer particle challenge of up to 1.6 liters per minute airflow. In some embodiments, the first and second adhesive are the same adhesive and the adhesive penetrates the allergen barrier layer and is substantially continuous through the allergen barrier layer from one side to the other.

In one embodiment, this invention also relates to a process for making the laminate useful as an allergen barrier structure, comprising the steps of:
a) providing an allergen barrier layer that has a first side and a second opposing side, and a first fabric layer that is either a woven fabric or knit fabric;
b) applying at least one first adhesive in discrete areas on the first side of the allergen barrier layer, the at least one first adhesive selected such that it penetrates the allergen barrier layer at least 70 % of the thickness of the allergen barrier layer from one side to the other;
c) applying the first fabric layer on the first side of the allergen barrier layer;
d) consolidating the first fabric layer and the allergen barrier layer into a pre-laminate wherein the discrete areas of the at least one first adhesive extend into one surface of the first fabric layer but not through the fabric layer from one surface to the other;
e) providing the pre-laminate of step d) and a second fabric layer that is a knit fabric if the first fabric layer is a woven fabric, or is a woven fabric if the first fabric is a knit fabric;
f) applying at least one second adhesive that is the same or different from the at least one first adhesive in discrete areas on the second opposing side of the allergen barrier layer, the at least one second adhesive selected such that it penetrates the allergen barrier layer at least 70 % of the thickness of the allergen barrier layer from one side to the other;
g) applying the second fabric layer on the second opposing side of the allergen barrier layer; and
h) consolidating the second fabric layer and the pre-laminate into a laminate wherein the discrete areas of at least one second adhesive extend into one surface of the second fabric layer but not through the fabric layer from one surface to the other.

This invention further relates to a process for making the laminate useful as an allergen barrier structure, comprising the steps of:
a) providing a woven fabric layer, an allergen barrier layer, and a knit fabric layer;
b) applying at least one adhesive in discrete areas on a first and opposing second side of the allergen barrier layer, the adhesive selected such that it penetrates the allergen barrier layer at least 70 % of the thickness of the allergen barrier layer from one side to the other;
c) applying the knit fabric layer on the first side of the allergen barrier layer and applying the woven fabric layer on the opposing second side of the allergen barrier layer; and
d) consolidating the woven fabric layer, the allergen barrier layer, and the knit fabric layer into a laminate wherein the discrete areas of adhesive extend into one surface of the woven fabric layer and into one surface knit fabric layer but not through either fabric layer from one surface to the other.

### BRIEF DESCRIPTION OF THE DRAWINGS

Figure 1 is a simplified illustration of a perspective view of a laminate representing one embodiment of the penetration of the adhesive through at least 70 % of the center allergen barrier layer from each surface.
Figure 2 is a simplified illustration of a detailed showing of the adhesive attachment of Figure 1.
Figure 3 is a simplified illustration of a perspective view of a laminate representing one embodiment of the penetration of the adhesive going all the way through the center layer and attaching both sides.
Figure 4 is a simplified illustration of a detailed showing of the adhesive attachment of Figure 3.
Figures 5A & 5B illustrate one possible process for manufacture of an allergen barrier laminate.
Figure 6 illustrates an alternative process for manufacture of an allergen barrier laminate.

### DETAILED DESCRIPTION OF THE INVENTION

This invention relates to a laminate that is useful as a washable covering for bedding articles, the laminate having a total basis weight of from 50 to 300 grams per square meter and being an allergen barrier structure that retains a filtration efficiency of 95 percent or greater after 35 washings when tested using a 1 micrometer particle challenge and up to 1.6 liters per minute airflow as measured by ASTM F2638-07. The laminate comprises, in order, a woven fabric layer having a thread count of 180 to 400; a nonwoven allergen barrier layer having a basis weight of from 6 to 10 grams per square meter and consisting of fibers having average diameter of from 100 to 450 nanometers; and a tricot knit fabric layer. It is believed that one reason the laminate has improved allergen performance and durability is that the inclusion of the tricot knit in the laminate compensates for the shrinkage of the woven fabric with each successive washing, helping to eliminate localized stresses in the laminate that could cause separation or structural wrinkles between the layers.

The woven fabric layer is attached to the allergen barrier layer by at least a first adhesive being distributed in discrete areas on a first side of the allergen barrier layer, with the first adhesive penetrating into the allergen barrier layer to a depth that is at least 70 % of the thickness of the allergen barrier layer. The first adhesive also penetrates into one surface of the woven fabric layer but does not extend through the fabric layer from one surface to the other. Likewise, the knit fabric layer is attached to the allergen barrier layer by at least a second adhesive, that can be the same or different from the first adhesive, being distributed in discrete areas on an opposing second side of the allergen barrier layer, with the second adhesive penetrating into the allergen barrier layer to a depth that is at least 70 % of the thickness of the allergen barrier layer. The second adhesive also penetrates into one surface of the knit fabric layer but does not extend through the fabric layer from one surface to the other.

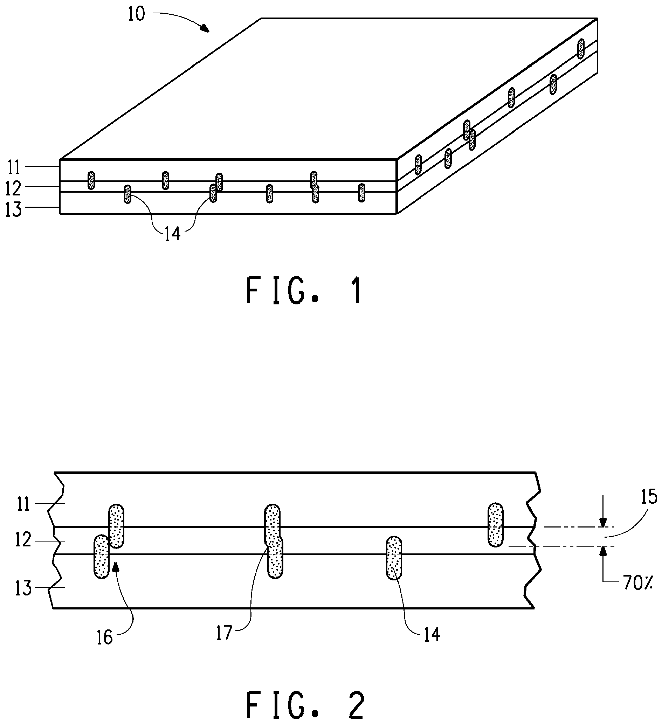

Fig. 1 is a simplified illustration of a perspective view of one embodiment of a laminate **10** having a woven fabric layer **11**, a nonwoven allergen barrier layer **12**, and a tricot knit fabric layer **13**, all be attached together via a set of discrete areas of adhesive, two of such areas represented by **14.** As shown, layers **11**, **12**, **13**, and areas of adhesive **14** are not drawn to scale but are drawn for increased clarity of description. Fig. 2 is a simplified illustration of a detailed showing of the adhesive attachment of Fig. 1. As shown, a set of discrete areas of adhesive, one of which is represented by **14**, is shown attaching both the tricot knit fabric layer **13** and the woven fabric layer **11**, respectively, to nonwoven allergen barrier layer **12.** As shown by **15**, the discrete areas of adhesive penetrate into the nonwoven allergen barrier layer **12** to a depth that is at least 70 % of the thickness of the allergen barrier layer. Further, the discrete areas of adhesive attaching the tricot knit fabric layer **13** and the woven fabric layer **11**, respectively, penetrate into one surface of the fabric layers but do not extend through the fabric layer from one surface to the other. In other words the discrete areas of adhesive do not penetrate through either the entire woven fabric layer or the tricot knit layer to the outer surface of the laminate.

In some embodiments, the laminate of Figs. 1 and 2 is made by a process that applies adhesive in two steps, applying a first adhesive on one side of the nonwoven allergen barrier layer **12** and then in a subsequent step applying a second adhesive on the other side. In such a process, the possibility exists the discrete areas of adhesive could be applied so that they are very close to each other or touch, as shown by the two areas of discrete adhesive **16**, or they can in fact overlap or partially overlap as shown by the two areas of discrete adhesive **17**, forming an adhesive connection that is substantially continuous through the allergen barrier layer **12** from one side to the other. In this embodiment, substantially continuous means an adhesive connection is made by discrete areas of adhesive meeting, overlapping, or partially overlapping in the allergen barrier layer.

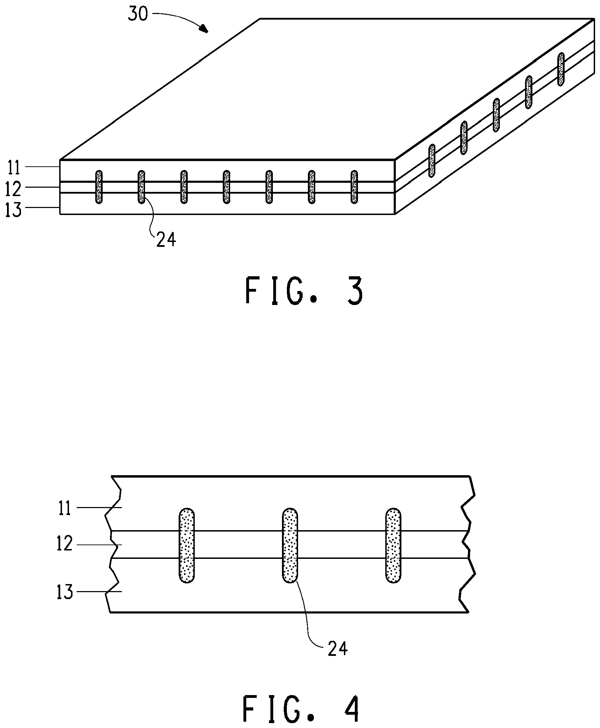

Fig. 3 is a simplified illustration of a perspective view of another embodiment of a laminate **30** having a woven fabric layer **11**, a nonwoven allergen barrier layer **12**, and a tricot knit fabric layer **13**, all be attached together via a set of discrete areas of adhesive, one of which is represented by **24.** As shown, layers **11**, **12**, **13**, and areas of adhesive **24** are not drawn to scale but are drawn for increased clarity of description. Fig. 4 is a simplified illustration of a detailed showing of the adhesive attachment of Fig. 3. As shown, a set of discrete areas of adhesive, one of which is represented by **24**, is shown attaching the tricot knit fabric layer **13** and the woven fabric layer **11**, respectively, to nonwoven allergen barrier layer **12.** As shown, the discrete areas of adhesive are continuous through the allergen barrier layer from one side to the other, penetrating thru the entire thickness of the nonwoven allergen barrier layer **12** from one side to the other. Further, the discrete areas of adhesive are shown attaching both the tricot knit fabric layer **13** and the woven fabric layer **11**, respectively, by penetrating into one surface of the fabric layers but not extending through the fabric layer from one surface to the other. In other words the discrete areas of adhesive do not penetrate through either the entire woven fabric layer or the tricot knit layer to the outer surface of the laminate.

It is believed the adhesive should penetrate into the nonwoven allergen barrier layer to a depth that is at least 70 % of the thickness of the allergen barrier layer, and in some embodiments is continuous or substantially continuous through the entire thickness of the allergen barrier layer, in order for the laminate to have both durability and filtration performance after 35 washings.

In some embodiments, the peel strength of the laminate is 0.5 pounds per inch (0.0875 N per mm) or greater. This is believed to ensure the laminate is adequately adhered together and is an indicator of adequate wash and mechanical durability over 35 wash/dry cycles. Laminates with peel strength of 0.3 lbs/in (0.0526 N per mm) or less have been found to have large scale delamination during washing. Laminates with peel strength of greater than 0.3 lbs/in (0.0526 N per mm) but less than 0.5 lbs/in (0.0875 N per mm) tend to have less large scale delamination with multiple washes, but do show signs of a textured surface that is indicative of small scale or localized delamination.

In some embodiments, the air permeability of the laminate is 5 cubic feet per minute (0.1416 m³ per minute) or greater. This provides an adequate amount of air breathability through the laminate needed for the practical use of bedding items that are fully encased by the barrier laminate. High air permeability through the barrier laminate allows for a proper airflow management in the bedding item, such as a pillow, by preventing excessive pressurization and ballooning of the encased bedding item as well as minimizing the build-up of the localized heat streaks in the bedding. While laminates having an air permeability of less than 5 cubic feet per minute (0.1416 m³ per minute) may be thought to have improved barrier, if the laminate does not have adequate air permeability, the bedding item will become pressurized during use, such as by the act of laying one's head on a pillow. This forces the air in the pillow to be squeezed out though a zipper and/or sewn seams, instead of through the barrier material; this is undesired because zippers and sewn seams tend to provide much poorer filtering than the laminate.

The filtration efficiency of the laminate is 95 percent or greater after 35 washings when tested using a 1 micrometer particle challenge and up to 1.6 liters per minute airflow as measured by ASTM F2638-07. This level of filtration efficiency is believed to provide adequate protection and barrier properties, because some allergens can be as small as 1 micrometers (i.e. cat dander, fragmented larger allergens etc), and an allergen fabric should be an effective filter media at a challenge level equivalent to the majority of the expected allergens from bedding. Airflow level can affect, to some extent, filtration efficiency of the allergen fabric/assembly, and 1.6 liters/minute airflow represents a slightly higher air displacement than is typically experienced during normal human movement during sleep and is therefore a more rigorous test of laminate performance.

The laminate comprises a high density woven fabric layer having thread count of from 160 to 400. As used herein, "thread count" is a measure of the fineness of fabric and is the total number of vertical and horizontal threads in one square inch (6.45 cm²) of fabric. It is believed a woven fabric having a thread count of less than 160 will not have adequate durability and a woven fabric having a thread count of greater than 400 provides a fabric that is aesthetically too stiff and becomes exceedingly expensive to provide. In some preferred embodiments, the woven fabric layer has a thread count of from 180 to 350, and in some most preferred embodiments the woven fabric layer thread count is from 200 to 270.

In some typical embodiments, the woven fabric layer can have a plain weave; in some other embodiments, the woven fabric can have a twill weave. In some most preferred embodiments the woven fabric layer is a cotton or polycotton fabric. By polycotton it is meant a cotton and polyester fiber blend of any ratio, however blends of 35 to 65 weight percent cotton and 65 to 35 weight percent polyester are preferred. In some embodiments, the woven fabric layer can be a woven fabric made from polyester fibers, nylon fibers, or mixtures of these fibers. In some embodiments a high density polyester terephthate woven face fabric is desired; examples of this type of fabric include Burlington 0529-15 fabric, which is a plain weave 100 % polyethylene terephthalate (PET) microfiber fabric having a basis weight of 2.75 oz/yd² (93.24 g/m²) and stretch of 8 to 12 % (both warp and fill) and a thread count of 212 (121x91 ends x picks/inch) (84 (48x36 ends x picks/cm)); and Asiatic Fiber Corporation Aclean R04 fabric, which is a 2/1 twill weave, 98 to 100 % PET fabric carbon filament yarn having a basis weight of 123 g/m² and a thread count of 166 (96x70 warp x weft/inch) (66 (38x28 warp x weft/cm)). Burlington is located in Greensboro, NC and Asiatic Fiber Corporation is located in Taipei, Taiwan.

The allergen barrier layer has a basis weight of from 6 to 10 grams per square meter, and in some embodiments, the basis weight is from 6 to 8 grams per square meter (gsm). A basis weight of less than 6 gsm is believed to promote delamination of the laminate and is believed to not have adequate mechanical integrity for at least 35 washings. A basis weight of greater than 10 gsm is not thought to add substantially improved performance but does add additional undesired cost.

The allergen barrier layer is a nonwoven consisting of fibers having average diameter of from 100 to 450 nanometers. As used herein, by average diameter is it meant the number average fiber diameter of the individual fibers in the nonwoven. In some embodiments, the nonwoven comprises fibers made from a polymer selected from the group consisting of nylon, polyester, polypropylene, polyurethane, polyolefin, and mixtures thereof. In some preferred embodiments, the nonwoven comprises fibers made from nylon.

In some embodiments, the allergen barrier layer has a Frazier air permeability of 3.5 m³/min/m² or greater. In some preferred embodiments the air permeability is 5 m³/min/m² or greater, and in some most preferred embodiments, the air permeability is 8 m³/min/m² or greater. The high air flow through the nanofiber layers of the present invention result in allergen-barrier fabrics providing great comfort to the user due to their breathability, while still maintaining a low level of allergen penetration.

In some embodiments, the polymeric nanofiber-containing web used as the allergen barrier layer can be produced by techniques such as electrospinning or electroblowing. Both electrospinning and electroblowing techniques can be applied to a wide variety of polymers, so long as the polymer is soluble in a solvent under relatively mild spinning conditions, i.e. substantially at ambient conditions of temperature and pressure. The polymer solution is prepared by selecting an appropriate solvent for the polymer. Suitable solvents can include such things alcohols, formic acid, dimethylacetamide and dimethyl formamide. The polymer solution can include other additives including any resins compatible with an associated polymer, plasticizers, ultraviolet ray stabilizers, crosslinking agents, curing agents, reaction initiators, colorants such as dyes and pigments, etc. If desired and/or needed, heating can be used to assist the dissolution of the polymer or additives.

In electrospinning, a high voltage is applied between a polymer solution and a target surface to create nanofibers and nonwoven mats. While many arrangements are possible, in essence, charge builds up on droplets of solution until the charge overcomes the surface tension of the droplets, causing the droplets to elongate and form fibrous material that is "spun" toward a target surface. Representative electrospinning processes are disclosed for example in United States Patent Nos. 4,127,706 and 6,673,136.

In electroblowing, a solution of polymer and solvent is fed to a spinning nozzle within a spinneret, to which a high voltage is applied and through which the polymeric solution is discharged. Meanwhile, an optionally heated compressed gas, typically air, is issued from air nozzles disposed in the sides of, or at the periphery of the spinning nozzle. The air is directed generally downward as a blowing gas stream which envelopes and forwards the polymeric solution from the spinning nozzle and aids in the formation of the fiber web. Generally, a plurality of spinnerets is used, which forms multiple fiber webs which are collected as a matt on an electrically grounded target, which is typically a porous collection belt, above a vacuum chamber. One representative electroblowing process is disclosed in International Publication Number WO2003/080905 (U.S. Serial No. 10/822,325). This process is able to make webs having basis weights of 1 g/m² and higher.

The laminate also comprises a tricot knit fabric layer that provides soft, wrinkle-resistant, and flexible protection for the functional allergen layer from mechanical abrasion while compensating for the shrinkage of the woven fabric with each successive washing. The use of the knit fabric helps to eliminate localized stresses during and after washing in the laminate that could cause separation or structural wrinkles between the layers. By tricot knit, it is meant a warp-knit fabric made in a plane jersey construction or a mesh, or a weft-knit; however, in a preferred embodiment the knit is a warp-knit tricot fabric.

In some preferred embodiments the tricot knit can stretch 10 percent or more in at least one direction, as measured by ASTM D2594 "Standard Test Method for Stretch Properties of Knitted Fabrics Having Low Power". In some preferred embodiments the knit can stretch 15 to 25 percent in at least one direction. This allows this layer to mimic the shrinkage and/or thermal deformation of the stronger woven face fabric, i.e., cotton or polycotton fabric, during washing and helps prevent delamination of the laminate. Tight knits with less elongation are believed to put too much stress on the laminate, causing cohesive failure between the layers. In some embodiments, the knit is constructed such that the fabric has small openings of an average size of about 1 mm in diameter to provide adequate mechanical protection of the allergen barrier layer during washing and normal wear, while still allowing air to freely flow through the knit. These openings are preferably formed by the knitting of courses and wales in warp-knits and the closeness of the formation of parallel rows of loops. In weft-knits, generally a single needle loops its own thread, and the openings are preferably formed by the size and tightness of the loops.

In some preferred embodiments the tricot knit fabric layer comprises polyester terephthalate fibers or nylon fibers. In some embodiments, the tricot knit fabric layer can be a knit fabric made from polyester fibers, nylon fibers, or mixtures of these fibers.

The woven fabric layer and the tricot knit fabric layers are attached to the allergen barrier layer by at least one adhesive being distributed in discrete areas on the sides of the allergen barrier layer. The at least one adhesive also penetrates into one surface of each of the woven and knit fabric layers but not extending through those layers. In some embodiments, a different adhesive is used for the woven layer than the tricot knit layer. In some preferred embodiments, the same adhesive is used for both layers.

In some embodiments, the adhesive has at the time of application to the allergen barrier layer or fabric or knit layers, a maximum viscosity of 8000 millipascal seconds, and in some preferred embodiments has a viscosity of less than 5,000 millipascal seconds. In some embodiments, the adhesive has an elongation of 500 to 700 % after curing; a Young's modulus after curing of 30,000 to 40,000 kPa; and a tensile strength after curing of less than 15,000 kPa.

Suitable adhesives include solvent-based adhesives, aqueous- or water-based adhesives, and hot-melt-based adhesives designed for washable fabric lamination, with a strong preference for moisture-cured reactive hot melts Example adhesives include the polyurethane Tacktile™ HL-9639 Reactive Hot Melt Adhesive available from H. B. Fuller Company, St Paul MN.

This invention also relates to processes for making the laminate useful as an allergen barrier structure. In one embodiment, the process involves applying the adhesive in a two steps, while in another embodiment the adhesive is applied in one step. The two-application-step process for making a laminate useful as an allergen barrier structure comprises the steps of
a) providing an allergen barrier layer that has a first side and an opposing second side, and a first fabric layer that is either a woven fabric or knit fabric;
b) applying at least one first adhesive in discrete areas on the first side of the allergen barrier layer, the at least one first adhesive selected such that it penetrates the allergen barrier layer at least 70 % of the thickness of the allergen barrier layer from one side to the other;
c) applying the first fabric layer on the first side of the allergen barrier layer;
d) consolidating the first fabric layer and the allergen barrier layer into a pre-laminate wherein the discrete areas of the at least one first adhesive extend into one surface of the first fabric layer but not through the fabric layer from one surface to the other;
e) providing the pre-laminate of step d) and a second fabric layer that is a knit fabric if the first fabric layer is a woven fabric, or is a woven fabric if the first fabric is a knit fabric;
f) applying at least one second adhesive that is the same or different from the at least one first adhesive in discrete areas on the opposing second side of the allergen barrier layer, the at least one second adhesive selected such that it penetrates the allergen barrier layer at least 70 % of the thickness of the allergen barrier layer from one side to the other;
g) applying the second fabric layer on the opposing second side of the allergen barrier layer; and
h) consolidating the second fabric layer and the pre-laminate into a laminate wherein the discrete areas of at least one second adhesive extend into one surface of the second fabric layer but not through the fabric layer from one surface to the other.

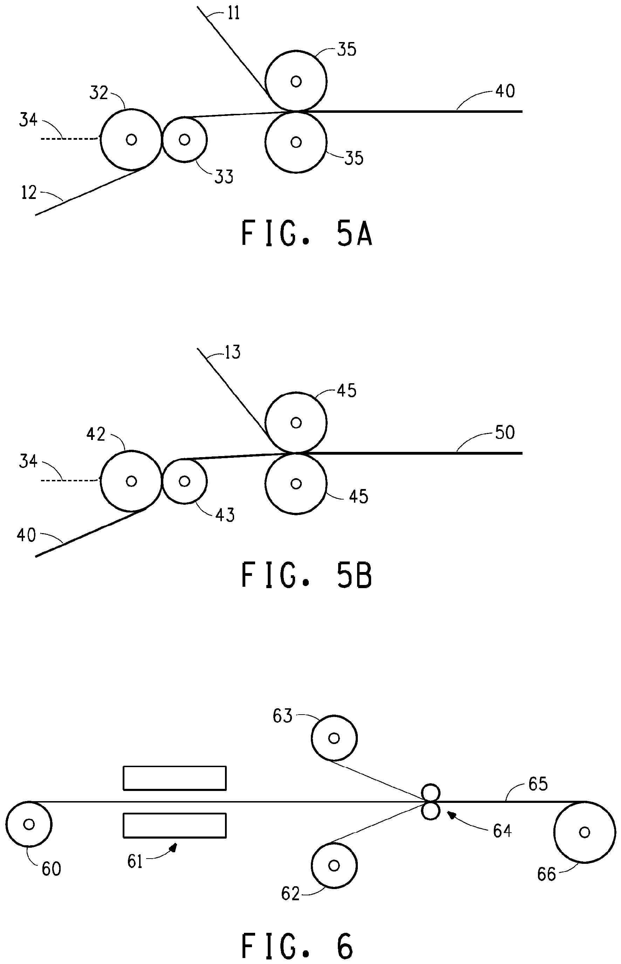

One embodiment of this two-application-step process is illustrated in Figs. 5A and 5B. Referring to Fig. 5A, allergen barrier layer 12 is supplied to a nip between adhesive applicator roll 32 and backup roller 33. Adhesive applicator roll 32 applies at least one adhesive from adhesive reservoir 34 in discrete areas to one side of the allergen barrier layer. The woven face fabric layer 11 is then laid onto the side of the allergen barrier that has had the adhesive applied and the layers are consolidated in a nip between a pair of rollers 35 to make a pre-laminate 40.

In this process, the adhesive preferably penetrates at least 70 % through the allergen barrier layer but a significant amount of the adhesive does not penetrate all the way through the thickness of that layer. Likewise, the adhesive penetrates into the woven face fabric layer but not all the way through the thickness of that layer. This reduces the amount of adhesive that can stick to rollers and other surfaces in the process.

Referring to Fig. 5B, the pre-laminate 40 is supplied to a nip between adhesive applicator roll 42 and backup roller 43, with the woven face fabric layer side of the pre-laminate in contact with backup roller 43 and the allergen barrier layer in contact with the applicator roll 42. If desired, the applicator roll and backup roller can be the same as for the first step. Adhesive applicator roll 42 applies at least one adhesive from adhesive reservoir 34 in discrete areas to the remaining unapplied side of the allergen barrier layer. The tricot knit back fabric layer 13 is then laid onto the side of the allergen barrier that has had the adhesive applied and the layers are consolidated in a nip between a pair of rollers 45 to make a laminate 50.

As with the pre-laminate the adhesive preferably penetrates at least 70 % through the allergen barrier layer but a significant amount of the adhesive does not penetrate all the way through the thickness of that layer. Likewise, the adhesive penetrates into the tricot knit back fabric layer but not all the way through the thickness of that layer.

Alternatively, the adhesive can be applied in one step. The one-application-step process for making the laminate useful as an allergen barrier structure comprises the steps of
a) providing a woven fabric layer, an allergen barrier layer, and a knit fabric layer;
b) applying at least one adhesive in discrete areas on a first and opposing second side of the allergen barrier layer, the adhesive selected such that it penetrates the allergen barrier layer at least 70 % of the thickness of the allergen barrier layer from one side to the other;
c) applying the knit fabric layer on the first side of the allergen barrier layer and applying the woven fabric layer on the opposing second side of the allergen barrier layer; and
d) consolidating the woven fabric layer, the allergen barrier layer, and the knit fabric layer into a laminate wherein the discrete areas of adhesive extend into one surface of the woven fabric layer and into one surface knit fabric layer but not through either fabric layer from one surface to the other.

One embodiment of the one-application-step process is illustrated in Fig. 6. The allergen barrier material is provided, for example, from roll of allergen barrier layer material 60 and then supplied to an adhesive applicator 61 that applies at least one adhesive to both sides of the allergen barrier layer in discrete areas. The woven face fabric layer 63 and the tricot knit back fabric layer 62 are then combined on either the side of the allergen barrier and the layers are consolidated in a nip between a pair of rollers 64 to make a laminate 65, which can be wound up into a roll 66 if desired.

In this process, the adhesive preferably penetrates at least 70 % through the allergen barrier layer but it is not required that the adhesive penetrate all the way through the thickness of that layer. However, it is desirable that the adhesive penetrate into both the woven and knit layers but not all the way through either of those layers.

In either the one- or two-step adhesive application process, in some preferred embodiments, the at least one adhesive is a hot melt adhesive applied in the molten state at 75 to 125 degrees Celsius. In some preferred embodiments, the adhesive is a hot melt polyurethane. In either process, in some embodiments, the amount of adhesive applied to the woven fabric side of the allergen barrier layer is preferably at least 1 gram per square meter more than the amount of adhesive applied to the knit fabric side of the allergen barrier layer.

The laminate is useful in a range of bedding and upholstery fabric applications, including but not limited to, pillow and mattress ticking, pillow and mattress protectors, pillow and mattress covers, sheets, mattress pads, comforters and duvets.

### Test Methods

Filtration efficiency testing. Filtration performance was determined for a 1 micrometer challenge using methodology as dictated by ASTM F2638-07, which is a standard test method for the use of aerosol filtration for measuring the performance of porous packaging materials as a surrogate microbial barrier.

Fiber Diameter was determined as follows. Ten scanning electron microscope (SEM) images at 5,000x magnification were taken of each nanofiber layer sample. The diameter of eleven (11) clearly distinguishable nanofibers were measured from the photographs and recorded. Defects were not included (i.e., lumps of nanofibers, polymer drops, intersections of nanofibers). The average (mean) fiber diameter for each sample was calculated.

Air permeability. The Frazier air permeability of laminates was determined before and after minimum of 35 wash/dry cycles to check for any structural changes related to sample wash durability. Frazier Air Permeability is a measure of air permeability of porous materials and is reported in units of ft³/min/ft². It measures the volume of air flow through a material at a differential pressure of 0.5 inches (12.7 mm) of water. An orifice is mounted in a vacuum system to restrict flow of air through sample to a measurable amount. The size of the orifice depends on the porosity of the material. Frazier permeability was measured in units of ft³/min/ft² using a Sherman W. Frazier Co. dual manometer with calibrated orifice, and converted to units of m³/min/m². All washed and unwashed laminates were measured 5 times at several locations with a standard commercial FX 3300 Air Permeability tester (Frazier) at 125 Pa over a 38 cm² area.

Wash durability. All laminates were washed in a typical GE top loaded consumer washer and dried in a typical GE consumer air dryer. Five laminate samples were used for the wash durability test. The wash durability test consisted of 35 wash cycles, with each washing cycle consisting of washing at hot/warm selection (∼60 minutes), with hot water temperature set at 140°F (60°C), followed by 40 minutes of low to medium temperature air drying, all samples having been washed with typical commercially available off-the-shelf detergent. Each washed sample was inspected for any signs of delamination or texturing (i.e., surface wrinkling suggestive of localized delamination).

Basis Weight was determined by ASTM D-3776 and reported in g/m².

### Examples

All of the laminates that follow were made by this general method. A roll of nylon-6,6 allergen barrier layer material was placed on the unwind of an adhesive laminator as represented in Fig. 5A and a polyurethane adhesive with catalyst was applied to one side of the allergen barrier layer with a patterned application roll. A face fabric was coextensively applied to the adhesive-patterned allergen barrier layer and the allergen barrier layer and the face fabric were then calendered in the nip between two calender rolls to form a pre-laminate. The pre-laminate was then wound onto a core and was then cured for 24 hours in a warm temperature-controlled room kept at an elevated temperature of between 25 and 50 degree Celsius. This cross-linked the polyurethane adhesive with the catalyst to make a stable, melt-resistant structure.

As represented in Fig. 5B, the roll of pre-laminate was then placed on the unwind of the adhesive laminator with the face fabric side of the pre-laminate being on bottom. An adhesive was applied to the other side of the allergen barrier layer with a patterned application roll. A back fabric was then coextensively applied to the adhesive-patterned allergen barrier layer and the pre-laminate and the back fabric were then calendered in the nip between two calender rolls to form a laminate allergen barrier structure. The pre-laminate was then wound onto a core and was then cured for 24 hours in a warm room as before.

All of the laminates used an allergen barrier layer consisting of nylon 6,6 nanofibers made using the process as disclosed in International Publication Number WO2003/080905. In the examples that follow, numerical items (e.g., 1-1, 1-2) illustrate embodiments of the invention while alphabetic items (e.g. 1-A, 1-B) illustrate comparisons. The amount of adhesive reported is a nominal amount with an estimated standard deviation of the application amount of plus or minus 1 g/m² per side.

### Example 1

This example illustrates the structural integrity of laminates after 35 washes.Various allergen barrier laminates were made with an allergen barrier fabric having basis weight of about 10 grams per square meter, a Frazier permeability of 80 to 90 liters/m²/sec, and mean flow pore diameter of 1.8 to 3.5 micrometers. The number average fiber diameter of the nanofibers in the fabric was 400 nm. Results are shown in Table 1. A "Pass" rating for "Structural Integrity after 35 Washes" means there were no signs of delamination. Conversely, a "Fail" rating indicates the laminates had either partial delamination, wrinkling, or adhesive bleed-through. All of the adhesives were polyurethane-based, some being reactive moisture cured hot melts and some being solvent type.

As shown in the table, laminates made with the combination of woven cotton on one side of the allergen barrier fabric and tricot knit fabric on the other side of the barrier fabric passed the structural integrity test, while combination of woven/woven, woven/nonwoven did not.

**Table 1**

| **Item** | **Face Fabric** | **1^{st} Adhesive Coverage (g/m²)** | **2^{nd} Adhesive Coverage (g/m²)** | **Back Fabric** | **Adhesive Type** | **Unwashed Laminate Air Permeability (cfm (m³ per minute))** | **Structural Integrity After 35 Washes** |
|---|---|---|---|---|---|---|---|
| 1-1 | Woven 96 cc Cotton | 11 | 9 | Tricot Knit 35 g/m² PET | Polyurethane (Solvent Based) | 14.5 (0.4106) | Pass |
| 1-2 | Woven 205 cc Cotton | 11 | 9 | Tricot Knit 35 g/m² Polyester Terephthalate | Polyurethane (Solvent Based) | 10.1 (0.2860) | Pass |
| 1-3 | Woven 350 cc Cotton | 11 | 9 | Tricot Knit 35 g/m² Polyester Terephthalate | Polyurethane (Solvent Based) | 3.5 (0.0991) | Pass |
| 1-4 | Woven 205 cc Cotton | 11 | 9 | Tricot Knit 35 g/m² Polyester Terephthalate | Polyurethane (Hot Melt) | 7.8 (0.2209) | Pass |
| 1-5 | Woven 205 cc Cotton | 11 | 9 | Tricot Knit 35 g/m² Polyester Terephthalate | Polyurethane (Hot Melt) | 6.0 (0.1699) | Pass |
| 1-A | Woven 205 cc Cotton | 10 | 10 | Woven 96 cc Cotton | Polyurethane (Hot Melt) | 10.9 (0.3087) | Fail |
| 1-B | Woven 205 cc Cotton | 10 | 10 | Woven 96 cc Cotton | Polyurethane (Hot Melt) | 10.3 (0.2917) | Fail |
| 1-C | Woven 205 cc Cotton | 10 | 10 | Woven 96 cc Cotton | Polyurethane (Hot Melt) | 10.1 (0.2860) | Fail |
| 1-D | Woven 205 cc Cotton | 10 | 4 | Nonwoven 17 g/m² Polypropylene | Polyurethane (Hot Melt) | 16.0 (0.4531) | Fail |
| 1-E | Woven 205 cc Cotton | 10 | 4 | Nonwoven 17 g/m² Polypropylene | Polyurethane (Hot Melt) | 15.3 (0.4332) | Fail |
| 1-F | Woven 205 cc Cotton | 10 | 4 | Nonwoven 17 g/m² Polypropylene | Polyurethane (Hot Melt) | 13.5 (0.3823) | Fail |
| 1-G | Woven 205 cc Cotton | 4 | 4 | Woven 96 cc Cotton | Polyurethane (Hot Melt) | 14.7 (0.4163) | Fail |
| 1-H | Woven 205 cc Cotton | 4 | 4 | Woven 96 cc Cotton | Polyurethane (Hot Melt) | 13.5 (0.3823) | Fail |
| 1-I | Woven 205 cc Cotton | 4 | 4 | Woven 96 cc Cotton | Polyurethane (Hot Melt) | 11.6 (0.3285) | Fail |
| 1-J | Woven 205 cc Cotton | 4 | 4 | Nonwoven 17 g/m² Polypropylene | Polyurethane (Hot Melt) | 13.7 (0.3879) | Fail |
| 1-K | Woven 205 cc Cotton | 4 | 4 | Nonwoven 17 g/m² Polypropylene | Polyurethane (Hot Melt) | 11.8 (0.3341) | Fail |
| 1-L | Woven 205 cc Cotton | 4 | 4 | Nonwoven 17 g/m² Polypropylene | Polyurethane (Hot Melt) | 14.1 (0.3993) | Fail |
| 1-M | Woven 96 cc Cotton | 10 | 10 | Woven 96 cc Cotton | Polyurethane (Hot Melt) | 13.3 (0.3766) | Fail |
| 1-N | Woven 96 cc Cotton | 4 | 4 | Woven 96 cc Cotton | Polyurethane (Hot Melt) | 20.4 (0.5777) | Fail |
| 1-O | Woven 96 cc Cotton | 4 | 4 | Nonwoven 17 g/m² Polypropylene | Polyurethane (Hot Melt) | 21.5 (0.6088) | Fail |
| 1-P | Woven 350 cc Cotton | 11 | 11 | Woven 96 cc Cotton | Polyurethane (Solvent Based) | 2.5 (0.0708) | Fail |

### Example 2

This example illustrates the effect of basis weight on proper adhesive penetration into the allergen barrier layer. Allergen barrier laminates were made with 205 woven cotton face fabric and 35 grams per square meter PET tricot knit fabric, but with varying basis weight allergen barrier fabrics, to determine the adhesive bleed-through performance of those barrier fabrics. As in Example 1, the number average fiber diameter of the nanofibers in all the allergen barrier fabrics was 400 nm.

Results are shown in Table 2. A "Pass" rating for "Adhesive Bleed-Through" means there was either no or acceptable bleed-through of the adhesive through the allergen barrier fabric and the face and back fabrics could be adequately laminated. Conversely, a "Fail" rating indicates the allergen barrier fabric had unacceptable adhesive bleed-through and/or the face and back fabrics could not be adequately laminated.

Allergen barrier fabrics having a basis weight of from 6 to 10 grams per square meter showed acceptable adhesive bleed-through performance when used in laminates, while lighterweight allergen barrier fabrics did not.

**Table 2**

| **Item** | **Face Fabric** | **Allergen Barrier Fabric (g/m²)** | **Back Fabric** | **Adhesive Bleed-Through** |
|---|---|---|---|---|
| 2-1 | Woven 205 cc Cotton | 10 | Tricot Knit 35 g/m² Polyester Terephthalate | Pass |
| 2-2 | Woven 205 cc Cotton | 8 | Tricot Knit 35 g/m² Polyester Terephthalate | Pass |
| 2-3 | Woven 205 cc Cotton | 6 | Tricot Knit 35 g/m² Polyester Terephthalate | Pass |
| 2-A | Woven 205 cc Cotton | 5 | Tricot Knit 35 g/m² Polyester Terephthalate | Fail |
| 2-B | Woven 205 cc Cotton | 3 | Tricot Knit 35 g/m² Polyester Terephthalate | Fail |

### Example 3

This example illustrates the impact of the knit structure on retention of filtration efficiency after 35 washes. Allergen barrier laminates were made with 205 cc woven cotton face fabric and 8 gram per square meter basis weight allergen barrier fabrics, but with varying types of knit fabrics, to determine adequate laminate washing performance. As in Example 1, the number average fiber diameter of the nanofibers in all the allergen barrier fabrics was 400 nm.

Results are shown in Table 3. Only the tricot knit maintained acceptable filtration efficiency after 35 washings, as measured by ASTM F2638-07 @ 1micrometer laminate.

Only laminates made with tricot-style knits retained adequate filtration efficiencies after 35 washings.

**Table 3**

| **Item** | **Face Fabric** | **Allergen Barrier Fabric (g/m²)** | **Back Fabric** | **Filtration Efficiency Before Washing (%)** | **Filtration Efficiency After Washing (%)** |
|---|---|---|---|---|---|
| 3-1 | Woven 205 cc Cotton | 8 | Tricot Knit 35 g/m² Polyester Terephthalate | 99.0 | 96.5 |
| 3-A | Woven 205 cc Cotton | 8 | Large Open Honeycomb Knit | 99.0 | 66.3 |
| 3-B | Woven 205 cc Cotton | 8 | Small Open Honeycomb Knit | 99.0 | 72.2 |
| 3-C | Woven 205 cc Cotton | 8 | Large Open Square Knit | 99.0 | 59.4 |
| 3-D | Woven 205 cc Cotton | 8 | Large Open Square Knit | 99.0 | 63.9 |

### Example 4

This example illustrates that a high density woven polyester terephthalate face fabric can be used in place of the woven cotton face fabric. Item 4-1 used Burlington 0529-15 fabric, which is a plain weave 100 % PET microfiber fabric having a basis weight of 2.75 oz/yd² (93.24 g/m²) and stretch of 8 to 12 % (both warp and fill) and a thread count of 212 (121x91 ends x picks/inch) (84 (48x36 ends x picks/cm)). Item 4-2 used and Asiatic Fiber Corporation Aclean R04 fabric, which is a 2/1 twill weave, 100 % PET fabric having a basis weight of 123 g/m², and a thread count of 166 (96x70 warp x weft/inch) (66 (38x28 warp x weft/cm)). The number average fiber diameter of the nanofibers in all the allergen barrier fabrics was 300 to 400 nm.

Results are shown in Table 4. All laminates maintained acceptable filtration efficiency and excellent durability with no sign of delamination after 35 washings, as measured by ASTM F2638-07 @ 1micrometer laminate.

| **Item** | **Face Fabric** | **Allergen Barrier Fabric (g/m²)** | **Back Fabric** | **Filtration Efficiency Before Washing (%)** | **Filtration Efficiency After Washing (%)** |
|---|---|---|---|---|---|
| 4-1 | Woven Polyester Terephthalate | 10 | Tricot Knit 35 g/m² Polyester Terephthalate | 99.0 | 97.6 |
| 4-2 | Woven Polyester Terephthalate | 10 | Tricot Knit 35 g/m² Polyester Terephthalate | 99.0 | 98.5 |

## Claims

1. A laminate useful as an allergen barrier structure, comprising:
in order,
a) a woven fabric layer having a thread count of 180 to 400:
b) a nonwoven allergen barrier layer having a basis weight of from 6 to 10 grams per square meter and consisting of fibers having average diameter of from 100 to 450 nanometers; and
c) a tricot knit fabric layer;
wherein the woven fabric layer is attached to the allergen barrier layer by a first adhesive being distributed in discrete areas on a first side of the allergen barrier layer, the discrete areas of adhesive penetrating into at least 70 % of the thickness of the allergen barrier layer and the first adhesive also penetrating into one surface of the woven fabric layer but not extending through said woven fabric layer from one surface to the other; and
wherein the tricot knit fabric layer is attached to the allergen barrier layer by a second adhesive being distributed in discrete areas on a second side of the allergen barrier layer, the discrete areas of adhesive penetrating into at least 70 % of the thickness of the allergen barrier layer, the second adhesive also penetrating into one surface of the tricot knit fabric layer but not extending through said knit fabric layer from one surface to the other; and
wherein the laminate has a total basis weight of from 50 to 300 grams per square meter and a filtration efficiency as measured by ASTM F2638-07 after 35 washings of 95 percent or greater for a 1 micrometer particle challenge of up to 1.6 liters per minute airflow.

2. The laminate of claim 1, wherein the first and second adhesive are the same.

3. The laminate of claim 1 or 2, wherein the peel strength of the laminate is 0.5 pounds per inch (0.0875 N per mm) or greater.

4. The laminate of any one of claims 1 to 3, wherein the nonwoven allergen barrier layer comprises fibers material made from a polymer selected from the group consisting of nylon, polyester, polypropylene, polyurethane, polyolefin, and mixtures thereof.

5. The laminate of claim 4, wherein the polymer is nylon 6,6.

6. The laminate of any one of claims 1 to 5, wherein the air permeability of the laminate is 5 cubic feet per minute (0.1416 m³ per minute) or greater.

7. The laminate of any one of claims 1 to 6, wherein the woven fabric layer is a cotton fabric or a polycotton fabric

8. The laminate of any one of claims 1 to 6, wherein the woven fabric layer comprises fibers selected from the group consisting of polyester fibers, nylon fibers, or mixtures thereof.

9. The laminate of any one of claims 1 to 8, wherein the knit fabric layer comprises fibers selected from the group consisting of polyester fibers, nylon fibers, or mixtures thereof.

10. The laminate of any one of claims 1 to 9, wherein at least the first or second adhesive penetrates the allergen barrier layer and is substantially continuous through the allergen barrier layer from one side to the other.

11. A process for making the laminate useful as an allergen barrier structure of any one of claims 1 to 10, comprising the steps of:
a) providing an allergen barrier layer that has a first side and an opposing second side, and a first fabric layer that is either a woven fabric or knit fabric;
b) applying at least one first adhesive in discrete areas on the first side of the allergen barrier layer, the at least one first adhesive selected such that it penetrates the allergen barrier layer at least 70 % of the thickness of the allergen barrier layer from one side to the other;
c) applying the first fabric layer on the first side of the allergen barrier layer;
d) consolidating the first fabric layer and the allergen barrier layer into a pre-laminate wherein the discrete areas of the at least one first adhesive extend into one surface of the first fabric layer but not through the fabric layer from one surface to the other;
e) providing the pre-laminate of step d) and a second fabric layer that is a knit fabric if the first fabric layer is a woven fabric, or is a woven fabric if the first fabric is a knit fabric;
f) applying at least one second adhesive that is the same or different from the at least one first adhesive in discrete areas on the opposing second side of the allergen barrier layer, the at least one second adhesive selected such that it penetrates the allergen barrier layer at least 70 % of the thickness of the allergen barrier layer from one side to the other;
g) applying the second fabric layer on the opposing second side of the allergen barrier layer; and
h) consolidating the second fabric layer and the pre-laminate into a laminate wherein the discrete areas of at least one second adhesive extend into one surface of the second fabric layer but not through the fabric layer from one surface to the other.

12. The process of claim 11, wherein the adhesive is a hot melt adhesive applied in the molten state at 75 to 125 deg C.

13. The process of claim 11 or 12, wherein the adhesive is polyurethane.

14. A process for making the laminate useful as an allergen barrier structure of any one of claims 1 to 10, comprising the steps of:
a) providing a woven fabric layer, an allergen barrier layer, and a knit fabric layer;
b) applying at least one adhesive in discrete areas on a first and opposing second side of the allergen barrier layer, the adhesive selected such that it penetrates the allergen barrier layer at least 70 % of the thickness of the allergen barrier layer from one side to the other;
c) applying the knit fabric layer on the first side of the allergen barrier layer and applying the woven fabric layer on the opposing second side of the allergen barrier layer; and
d) consolidating the woven fabric layer, the allergen barrier layer, and the knit fabric layer into a laminate wherein the discrete areas of adhesive extend into one surface of the woven fabric layer and into one surface knit fabric layer but not through either fabric layer from one surface to the other.

15. The process of claim 14, wherein the adhesive is polyurethane.

## Patentansprüche

1. Laminat, das als Allergenbarrierestruktur nützlich ist, umfassend:
in dieser Reihenfolge
a) eine gewobene Textilstoffschicht, die eine Fadenzahl von 180 bis 400 aufweist;
b) eine nichtgewobene Allergenbarriereschicht, die ein Flächengewicht von 6 bis 10 Gramm pro Quadratmeter aufweist und aus Fasern besteht, die einen durchschnittlichen Durchmesser von 100 bis 450 Nanometern aufweist; und
c) eine Trikotstrickstoffschicht;
wobei die gewobene Textilstoffschicht an die Allergenbarriereschicht durch einen ersten Klebstoff befestigt ist, der in einzelnen Bereichen auf einer ersten Seite der Allergenbarriereschicht verteilt ist, wobei die einzelnen Bereiche von Klebstoff in mindestens 70 % der Dicke der Allergenbarriereschicht eindringen und der erste Klebstoff ebenfalls in eine Oberfläche der gewobenen Textilstoffschicht eindringt, sich jedoch nicht durch die gewobene Textilstoffschicht von einer Oberfläche zur anderen erstreckt; und
wobei die Trikotstrickstoffschicht an der Allergenbarriereschicht durch einen zweiten Klebstoff befestigt ist, der in einzelnen Bereichen auf einer zweiten Seite der Allergenbarriereschicht verteilt ist, wobei die einzelnen Bereiche von Klebstoff in mindestens 70 % der Dicke der Allergenbarriereschicht eindringen, der zweite Klebstoff ebenfalls in eine Oberfläche der Trikotstrickstoffschicht eindringt, sich jedoch nicht durch die gewobene Textilstoffschicht von einer Oberfläche zur anderen erstreckt; und
wobei das Laminat ein gesamtes Flächengewicht von 50 bis 300 Gramm pro Quadratmeter und eine Filtriereffizienz, wie durch ASTM F2638-07 nach 35 Wäschen gemessen, von 95 Prozent oder mehr für eine 1 Mikrometer-Teilchenherausforderung von bis zu 1,6 Litern pro Minute Luftströmung aufweist.

2. Laminat nach Anspruch 1, wobei der erste und zweite Klebstoff derselbe sind.

3. Laminat nach Anspruch 1 oder 2, wobei die Abschälfestigkeit des Laminats 0,5 Pfund pro Zoll (0,0875 N pro mm) oder mehr beträgt.

4. Laminat nach einem der Ansprüche 1 bis 3, wobei die nichtgewobene Allergenbarriereschicht Fasermaterial umfasst, das aus einem Polymer hergestellt ist ausgewählt aus der Gruppe bestehend aus Nylon, Polyester, Polypropylen, Polyurethan, Polyolefin und Mischungen davon.

5. Laminat nach Anspruch 4, wobei das Polymer Nylon 6,6 ist.

6. Laminat nach einem der Ansprüche 1 bis 5, wobei die Luftdurchlässigkeit des Laminats 5 Kubikfuß pro Minute (0,1416 m³ pro Minute) oder mehr beträgt.

7. Laminat nach einem der Ansprüche 1 bis 6, wobei der gewobene Textilstoffschicht ein Baumwollstoff oder ein Baumwoll-Polyester-Mischgewebe ist.

8. Laminat nach einem der Ansprüche 1 bis 6, wobei die gewobene Textilstoffschicht Fasern umfasst ausgewählt aus der Gruppe bestehend aus Polyesterfasern, Nylonfasern oder Mischungen davon.

9. Laminat nach einem der Ansprüche 1 bis 8, wobei die Strickstoffschicht Fasern umfasst ausgewählt aus der Gruppe bestehend aus Polyesterfasern, Nylonfasern oder Mischungen davon.

10. Laminat nach einem der Ansprüche 1 bis 9, wobei mindestens der erste oder zweite Klebstoff in die Allergenbarriereschicht eindringt und im Wesentlichen kontinuierlich durch die Allergenbarriereschicht von einer Seite zu der anderen ist.

11. Verfahren zum Herstellen des Laminats, das als Allergenbarrierestruktur nach einem der Ansprüche 1 bis 10 nützlich ist, umfassend die Schritte des:
a) Bereitstellens einer Allergenbarriereschicht, die eine Seite und eine entgegengesetzte zweite Seite und eine erste Textilstoffschicht aufweist, die entweder ein gewobener Textilstoff oder ein Strickstoff ist;
b) Aufbringens mindestens eines ersten Klebstoffs in einzelne Bereiche auf der ersten Seite der Allergenbarriereschicht, wobei der mindestens eine erste Klebstoff so ausgewählt wird, dass er in die Allergenbarriereschicht mindestens 70 % der Dicke der Allergenbarriereschicht von einer Seite zu der anderen eindringt;
c) Aufbringens der ersten Textilstoffschicht auf die erste Seite der Allergenbarriereschicht;
d) Konsolidierens der ersten Textilstoffschicht und der Allergenbarriereschicht zu einem Vorlaminat, wobei die einzelnen Bereiche des mindestens einen ersten Klebstoffs sich in eine Oberfläche der ersten Textilstoffschicht, jedoch nicht durch die Textilstoffschicht von einer Oberfläche zu der anderen erstrecken;
e) Bereitstellens des Vorlaminats aus Schritt d) und einer zweiten Textilstoffschicht, die ein Strickstoff ist, wenn die erste Textilstoffschicht ein gewobener Textilstoff ist, oder ein gewobener Textilstoff ist, wenn der erste Textilstoff ein Strickstoff ist;
f) Aufbringens mindestens eines zweiten Klebstoffs, der gleich wie oder verschieden von dem mindestens einen ersten Klebstoff in einzelnen Bereichen auf der entgegengesetzten zweiten Seite der Allergenbarriereschicht ist, wobei der mindestens eine zweite Klebstoff so ausgewählt wird, dass er in die Allergenbarriereschicht mindestens 70 % der Dicke der Allergenbarriereschicht von einer Seite zu der anderen eindringt;
g) Aufbringens der zweiten Textilstoffschicht auf die entgegengesetzte zweite Seite der Allergenbarriereschicht; und
h) Konsolidierens der zweiten Textilstoffschicht und des Vorlaminats zu einem Laminat, wobei die einzelnen Bereiche des mindestens einen zweiten Klebstoffs sich in eine Oberfläche der zweiten Textilstoffschicht, jedoch nicht durch die Textilstoffschicht von einer Seite zu der anderen erstrecken.

12. Verfahren nach Anspruch 11, wobei der Klebstoff ein Heißschmelzklebstoff ist, der im geschmolzenen Zustand bei 75 bis 125 Grad C aufgebracht wird.

13. Verfahren nach Anspruch 11 oder 12, wobei der Klebstoff Polyurethan ist.

14. Verfahren zum Herstellen des Laminats, das als Allergenbarrierestruktur nützlich ist, nach einem der Ansprüche 1 bis 10, umfassend die Schritte des:
a) Bereitstellens einer gewobenen Textilstoffschicht, einer Allergenbarriereschicht und einer Strickstoffschicht;
b) Aufbringens mindestens eines Klebstoffs in einzelne Bereiche auf einer ersten und entgegengesetzten zweiten Seite der Allergenbarriereschicht, wobei der Klebstoff so ausgewählt wird, dass er in die Allergenbarriereschicht mindestens 70 % der Dicke der Allergenbarriereschicht von einer Seite zu der anderen eindringt;
c) Aufbringens der Strickstoffschicht auf die erste Seite der Allergenbarriereschicht und Aufbringens der gewobenen Textilstoffschicht auf die entgegengesetzte zweite Seite der Allergenbarriereschicht; und
d) Konsolidierens der gewobenen Textilstoffschicht, der Allergenbarriereschicht und der Strickstoffschicht zu einem Laminat, wobei die einzelnen Bereiche des Klebstoffs sich in eine Oberfläche der gewobenen Textilstoffschicht und in eine Oberfläche der Strickstoffschicht, jedoch nicht durch eine der beiden Textilstoffschichten von einer Oberfläche zu der anderen erstrecken.

15. Verfahren nach Anspruch 14, wobei der Klebstoff Polyurethan ist.

## Revendications

1. Stratifié utile comme structure formant barrière aux allergènes, comprenant :
dans cet ordre,
a) une couche de textile tissé ayant un nombre de fils de 180 à 400;
b) une couche non-tissée formant barrière aux allergènes ayant un poids de base de 6 à 10 grammes par mètre carré et constituée de fibres ayant un diamètre moyen de 100 à 450 nanomètres; et
c) une couche de textile tricoté;
la couche de textile tissé étant fixée à la couche formant barrière aux allergènes par un premier adhésif qui est réparti dans des zones discrètes sur un premier côté de la couche formant barrière aux allergènes, les zones discrètes de l'adhésif pénétrant dans au moins 70 % de l'épaisseur de la couche formant barrière aux allergènes et le premier adhésif pénétrant également dans une surface de la couche de textile tissé mais ne s'étendant pas à travers ladite couche de textile tissé d'une surface à l'autre; et
la couche de textile tricoté étant fixée à la couche formant barrière aux allergènes par un second adhésif qui est réparti dans des zones discrètes sur un second côté de la couche formant barrière aux allergènes, les zones discrètes de l'adhésif pénétrant dans au moins 70 % de l'épaisseur de la couche formant barrière aux allergènes, le second adhésif pénétrant également dans une surface de la couche de textile tricoté, mais ne s'étendant pas à travers ladite couche de textile tricoté d'une surface à l'autre; et
le stratifié ayant un poids de base total de 50 à 300 grammes par mètre carré et une efficacité de filtration, telle que mesurée selon la norme ASTM F2638-07 après 35 lavages, de 95 pour cent ou plus pour un test avec des particules de 1 micromètre allant jusqu'à 1,6 litre d'écoulement d'air par minute.

2. Stratifié selon la revendication 1, le premier et le second adhésif étant identiques.

3. Stratifié selon la revendication 1 ou 2, la résistance au décollement du stratifié étant de 0,5 livre par pouce (0,0875 N par mm) ou plus.

4. Stratifié selon l'une quelconque des revendications 1 à 3, la couche non-tissée formant barrière aux allergènes comprenant le matériau de fibres fabriqué à partir d'un polymère sélectionné dans le groupe constitué du nylon, du polyester, du polypropylène, du polyuréthane, de polyoléfine, et de leurs mélanges.

5. Stratifié selon la revendication 4, le polymère étant le nylon 6,6.

6. Stratifié selon l'une quelconque des revendications 1 à 5, la perméabilité à l'air du stratifié étant de 5 pieds cube par minute (0,1416 m³ par minute) ou plus.

7. Stratifié selon l'une quelconque des revendications 1 à 6, la couche de textile tissé étant un textile de coton ou un textile polycoton.

8. Stratifié selon l'une quelconque des revendications 1 à 6, la couche de textile tissé comprenant des fibres sélectionnées dans le groupe constitué des fibres de polyester, des fibres de nylon, ou de leurs mélanges.

9. Stratifié selon l'une quelconque des revendications 1 à 8, la couche de textile tricoté comprenant des fibres sélectionnées dans le groupe constitué des fibres de polyester, des fibres de nylon, ou de leurs mélanges.

10. Stratifié selon l'une quelconque des revendications 1 à 9, dans lequel au moins le premier ou le second adhésif pénètre dans la couche formant barrière aux allergènes et est sensiblement continu à travers la couche formant barrière aux allergènes d'un côté à l'autre.

11. Procédé de fabrication du stratifié utile comme structure formant barrière aux allergènes selon l'une quelconque des revendications 1 à 10, comprenant les étapes de :
a) fourniture d'une couche formant barrière aux allergènes qui présente un premier côté et un second côté opposé, et une première couche de textile qui est soit un textile tissé soit un textile tricoté;
b) application d'au moins un premier adhésif dans des zones discrètes sur le premier côté de la couche formant barrière aux allergènes, l'au moins un premier adhésif étant sélectionné de sorte qu'il pénètre dans la couche formant barrière aux allergènes sur au moins 70 % de l'épaisseur de la couche formant barrière aux allergènes d'un côté à l'autre;
c) application de la première couche de textile sur le premier côté de la couche formant barrière aux allergènes;
d) consolidation de la première couche de textile et de la couche formant barrière aux allergènes en un pré-stratifié, les zones discrètes de l'au moins un premier adhésif s'étendant dans une surface de la première couche de textile mais pas à travers la couche de textile d'une surface à l'autre;
e) fourniture du pré-stratifié de l'étape d) et d'une seconde couche de textile, qui est un textile tricoté si la première couche de textile est un textile tissé, ou est un textile tissé si le premier textile est un textile tricoté;
f) application d'au moins un second adhésif qui est identique ou différent de l'au moins un premier adhésif dans des zones discrètes sur le second côté opposé de la couche formant barrière aux allergènes, l'au moins un second adhésif étant sélectionné de sorte qu'il pénètre dans la couche formant barrière aux allergènes sur au moins 70 % de l'épaisseur de la couche formant barrière aux allergènes d'un côté à l'autre;
g) application de la seconde couche de textile sur le second côté opposé de la couche formant barrière aux allergènes; et
h) consolidation de la seconde couche de textile et du pré-stratifié en un stratifié, les zones discrètes de l'au moins un second adhésif s'étendant dans une surface de la seconde couche de textile mais pas à travers la couche de textile d'une surface à l'autre.

12. Procédé selon la revendication 11, l'adhésif étant un adhésif thermofusible appliqué à l'état fondu à 75 à 125 deg. C.

13. Procédé selon la revendication 11 ou 12, l'adhésif étant le polyuréthane.

14. Procédé de fabrication du stratifié utile comme structure formant barrière aux allergènes selon l'une quelconque des revendications 1 à 10, comprenant les étapes de :
a) fourniture d'une couche de textile tissé, d'une couche formant barrière aux allergènes, et d'une couche de textile tricoté;
b) application d'au moins un adhésif dans des zones discrètes sur un premier et un second côté opposé de la couche formant barrière aux allergènes, l'adhésif étant sélectionné de sorte qu'il pénètre dans la couche formant barrière aux allergènes sur au moins 70 % de l'épaisseur de la couche formant barrière aux allergènes d'un côté à l'autre;
c) application de la couche de textile tricoté sur le premier côté de la couche formant barrière aux allergènes et application de la couche de textile tissé sur le second côté opposé de la couche formant barrière aux allergènes; et
d) consolidation de la couche de textile tissé, de la couche formant barrière aux allergènes, et de la couche de textile tricoté en un stratifié, les zones discrètes de l'adhésif s'étendant dans une surface de la couche de textile tissé et dans une surface de la couche de textile tricoté mais pas à travers l'une ou l'autre couche de textile d'une surface à l'autre.

15. Procédé selon la revendication 14, l'adhésif étant le polyuréthane.
